# DEMANDE DE BREVET EUROPEEN

(11) **EP 0 834 933 A1**
(43) Date de publication de la demande: **08.04.1998**
(21) Numéro de dépôt: 97402265.9
(22) Date de dépôt: 29.09.1997
(51) Int. Cl.: H01M 2/00, H01M 6/02, H01M 10/02, H01M 10/16

(54) **Générateur électrochimique contenant un dispositif d'introduction et de maintien d'un faisceau d'électrodes**

(30) Priorité: 03.10.1996 FR 9612059
(71) Demandeur: SAFT, F-93230 Romainville (FR)
(72) Inventeur: Pasquier, Eric, 86000 Poitiers (FR)
(74) Mandataire: Laroche, Danièle

(57) **Abrégé**

Ce dispositif (10) permet l'introduction et le maintien d'un faisceau d'électrodes dans un conteneur pourvu d'une base et recevant un couvercle, le faisceau comportant deux faces planes opposées et le conteneur comportant deux parois planes opposées ; il est constitué de deux feuillards (12) reliés par une lame centrale (11) et destinés à s'interposer entre les faces planes du faisceau et les parois planes du conteneur, les deux feuillards (12) formant des secteurs cylindriques élastiques, avantageusement paraboliques, à concavité tournée vers l'extérieur une fois montés.

## Description

L'invention concerne un générateur électrochimique contenant un dispositif d'introduction et de maintien d'un faisceau d'électrodes dans un conteneur pourvu d'une base et recevant un couvercle, ledit faisceau comportant deux faces planes opposées et ledit conteneur comportant deux parois planes opposées.

Il peut s'agir notamment d'un générateur électrochimique dont le faisceau d'électrodes est constitué par un bobineau enroulé et aplati, inséré dans un godet auquel le dernier tour d'électrode négative doit être connecté.

Il est connu d'interposer entre les électrodes et le conteneur des cales, éventuellement conductrices (cf. par exemple US-2 842 607). On connaît aussi (cf. par exemple EP-0 666 608) des espaceurs à nervures ou autres reliefs destinés entre autres à comprimer le faisceau d'électrodes afin d'optimiser ses performances en puissance, mais cette pression n'est pas constante dans le temps, notamment au fur et à mesure des déformations du faisceau (phénomène de gonflement consécutif aux cycles de décharge). Le même problème se pose pour un dispositif de calage et d'introduction connu, constitué de deux feuillards reliés par une lame centrale et destinés à s'interposer entre les faces planes du faisceau (bobineau) et les parois planes du conteneur (godet).

Le but de l'invention est de remédier à ce problème en proposant un générateur électrochimique contenant un dispositif permettant d'exercer une pression sur le faisceau d'électrodes qui soit plus uniforme dans le temps que les dispositifs connus.

L'objet de l'invention est un générateur électrochimique comprenant un conteneur pourvu d'un fond et de deux parois planes opposées, et un faisceau électrochimique comportant deux faces planes opposées, ayant une largeur et une hauteur, et une partie inférieure ayant une longueur qui est la largeur dudit faisceau et une largeur qui est l'épaisseur dudit faisceau, générateur contenant un dispositif assurant les fonctions d'introduction et de maintien en compression dudit faisceau dans ledit conteneur, caractérisé en ce que ledit dispositif est constitué par une lame centrale de dimensions au moins égales à celles de ladite partie inférieure dudit faisceau, reliée par ses bords longitudinaux de part et d'autre à deux feuillards de dimensions au moins égales à celles desdites faces planes dudit faisceau, lesdits feuillards formant des secteurs cylindriques élastiques à concavité tournée vers l'extérieur et étant placés entre lesdites faces planes dudit faisceau et les parois planes dudit conteneur, et ladite lame prenant appui sur ledit fond.

Pour obtenir une pression uniforme sur les faces planes du faisceau, la surface d'appui des feuillards doit être au moins égale à la surface de ces faces planes. Si la surface des feuillards est plus petite, la pression execée sur une partie seulement du faisceau introduit une déformation indésirable. Cette déformation peut entraîner des court-circuits entre les électrodes à cause de la faible épaisseur du séparateur utilisé. Elle peut aussi provoquer un fonctionnement hétérogène du générateur à cause d'une densité de courant inégalement répartie.

Avantageusement les dimensions desdits feuillards sont supérieures de 1 à 2mm à la largeur desdites faces planes. Par conséquent ladite lame possède une longueur légèrement supérieure à la longueur de ladite partie inférieure

Ces secteurs sont parfaitement maintenus sur leurs bords rectilignes soit par leur liaison avec la lame, soit par leur appui linéaire sur le haut du conteneur, rigidifié par le couvercle qui y est soudé. Ils exercent sur le faisceau d'électrodes une contre-pression sensiblement uniforme dans le temps.

Les secteurs cylindriques peuvent être formés par une génératrice s'appuyant sur une directrice constituée d'un arc de conique, en particulier un arc de cercle ou de préférence un arc de parabole qui assure la plus grande uniformité de pression le long du bobineau. Les secteurs cylindriques peuvent aussi être prismatiques et s'approcher plus ou moins des arcs de courbe précités.

Les feuillards sont de préférence en acier inoxydable à ressort et sont cuivrés au moins sur leur face interne.

Avantageusement, la lame et/ou les feuillards sont ajourés.

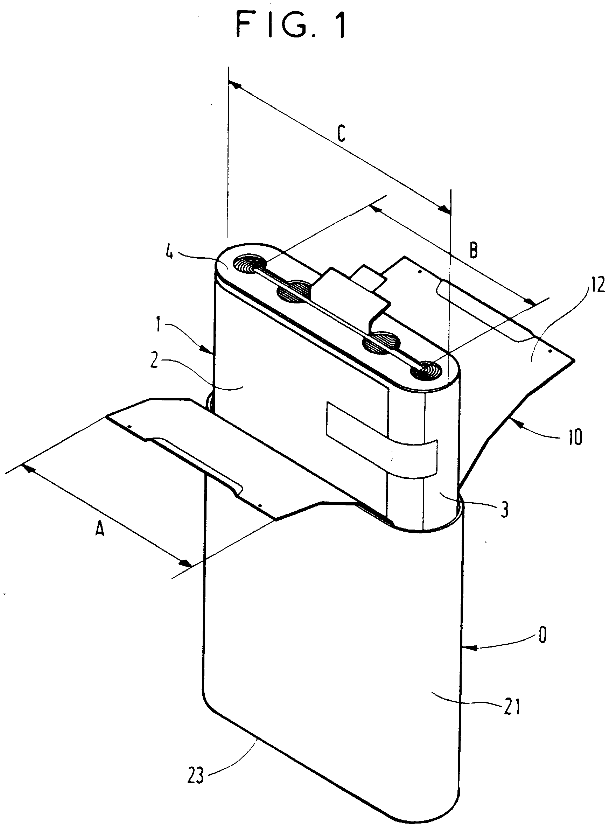

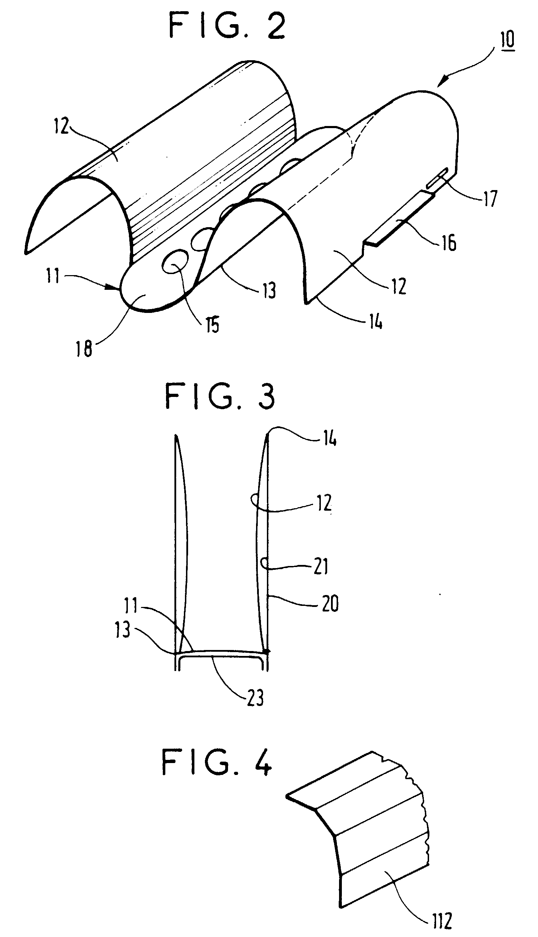

D'autres caractéristiques et avantages de l'invention ressortiront de la description suivante, en référence aux dessins annexés sur lesquels :
. la figure 1 représente en perspective éclatée un générateur selon l'invention,
. la figure 2 représente en perspective un mode de réalisation d'un dispositif d'introduction conforme à l'invention,
. la figure 3 représente en coupe partielle schématique le dispositif de la figure 2 dans un conteneur,
. la figure 4 représente une vue partielle d'une variante de réalisation du dispositif d'introduction et de maintien selon l'invention.

La figure 1 montre un bobineau 1 de largeur totale C, sous la forme écrasée d'un parallélépipède aux grandes faces planes 2 de largeur B et aux côtés arrondis 3, une cale isolante isolante haute 4, et un dispositif d'introduction selon l'invention appelé "chaussette" 10 constituée de deux feuillards conducteurs 12 de largeur A telle que C > A ≥ B. Les feuillards 12 sont reliés par une lame centrale 11 (cf. figure 2), permettant d'introduire et de maintenir le bobineau 1 dans le godet 20. Celui-ci comporte des faces planes opposées 21, une base 23 (figure 3) et un couvercle qu'on vient fixer par soudure après l'introduction du bobineau 1.

Dans la chaussette conforme à l'invention (figure 2), les feuillards 12 forment des secteurs cylindriques paraboliques attachés par un bord rectiligne 13 à la lame 11 et dont l'autre bord rectiligne 14, libre, est destiné à venir s'appuyer sur les parois internes 21 du godet 20, après l'introduction du bobineau et de la chaussette. La concavité des secteurs cylindriques est donc tournée vers l'extérieur après l'introduction. Le haut des parois internes 21, servant d'appui aux feuillards 12, est rigidifié par le couvercle. Les feuillards 12 sont donc capables de reprendre parfaitement les pressions exercées par le bobineau 1, et symbolisées par les flèches de la figure 3, qu'ils répercutent en haut sur les parois 21 et en bas sur les bords de la lame 11, c'est-à-dire dans des zones non déformables ou peu déformables.

Selon une variante de réalisation représentée sur la figure 3, les secteurs cylindriques 12 peuvent être formés sur une directrice conique, en particulier un arc de cercle ou de parabole.

Selon une autre variante de réalisation représentée sur la figure 4, les secteurs cylindriques 112 peuvent être prismatiques, c'est-à-dire constitués de portions planes reliées entre elles de manière à s'approcher plus ou moins des arcs de courbes précédemment décrits.

La lame 11 peut se terminer par des demi-ronds 18 de manière à mieux épouser la forme correspondante du fond du godet et offrir un meilleur calage.

Afin d'alléger le dispositif, il est possible de prévoir dans la lame 11, voire les feuillards 12, des évidements 15.

Les bords libres 14 des feuillards 12 peuvent comporter une patte 16 facilitant la prise et la poussée lors de l'introduction de la chaussette 10 dans le godet 20. La connexion électrique de la chaussette 10 et du godet 20 peut se faire par soudures électriques, au niveau de zones représentées en 17.

Les feuillards sont avantageusement réalisés en acier inoxydable à ressort, cuivré au moins sur la face interne, pour assurer un bon contact électrique entre l'électrode externe du bobineau 1 et les feuillards 12 qui s'appuient sur elle.

## Revendications

1. Générateur électrochimique comprenant un conteneur (20) pourvu d'un fond (23) et de deux parois planes opposées (21), et un faisceau électrochimique (1) comportant deux faces planes opposées (2), ayant une largeur et une hauteur, et une partie inférieure ayant une longueur qui est la largeur dudit faisceau et une largeur qui est l'épaisseur dudit faisceau, générateur contenant un dispositif assurant les fonctions d'introduction et de maintien en compression dudit faisceau (1) dans ledit conteneur (20), caractérisé en ce que ledit dispositif (10) est constitué par une lame centrale (11) de dimensions au moins égales à celles de ladite partie inférieure dudit faisceau, reliée par ses bords longitudinaux de part et d'autre à deux feuillards (12) de dimensions au moins égales à celles desdites faces planes (2) dudit faisceau, lesdits feuillards formant des secteurs cylindriques élastiques à concavité tournée vers l'extérieur et étant placés entre lesdites faces planes (2) dudit faisceau (1) et les parois planes (21) dudit conteneur (20), et ladite lame (11) prenant appui sur ledit fond (23).

2. Générateur selon la revendication 1, dans lequel les dimensions desdits feuillards sont supérieures de 1 à 2mm à la largeur desdites faces planes.

3. Générateur selon l'une des revendications 1 et 2, dans lequel lesdits secteurs cylindriques sont formés sur une directrice conique, en particulier un arc de cercle ou de parabole.

4. Générateur selon l'une des revendications 1 et 2, dans lequel lesdits secteurs cylindriques sont prismatiques.

5. Générateur selon l'une des revendications précédentes, dans lequel les feuillards sont en acier inoxydable, cuivré au moins sur leur face interne.

6. Générateur selon l'une des revendications précédentes, dans lequel ladite lame et/ou lesdits feuillards sont ajourés.
